# EUROPÄISCHE PATENTSCHRIFT

(11) **EP 1 580 035 B1**
(45) Veröffentlichungstag und Bekanntmachung des Hinweises auf die Patenterteilung: **30.05.2007**
(21) Anmeldenummer: 04007320.7
(22) Anmeldetag: 26.03.2004
(51) Int. Cl.: B60C 11/13

(54) **Fahrzeugluftreifen**
Pneumatic tire
Bandage pneumatique

(43) Veröffentlichungstag der Anmeldung: 28.09.2005
(73) Patentinhaber: Continental Aktiengesellschaft, 30165 Hannover (DE)
(72) Erfinder: METZ, Markus, 31535 Neustadt (DE)

(56) Entgegenhaltungen:
- US-A1- 2002 124 922

## Beschreibung

Die Erfindung betrifft einen Fahrzeugluftreifen mit einem Laufstreifen mit einem Profil, welches durch Umfangsnuten, Quernuten und dergleichen gebildete Profilpositive, wie Profilblöcke oder in Umfangsrichtung umlaufende Laufstreifenbänder aufweist, wobei Quernuten vorgesehen sind, die mit einer Knickstelle versehen sind, an welcher eine Richtungsänderung unter einem stumpfen Winkel erfolgt. Ein derartiger Reifen ist aus der US-A- 2002/0124922 bekannt.

Fahrzeugluftreifen mit Laufstreifenprofilen mit Band- und / oder mit Blockstrukturen sind in unterschiedlichsten Ausführungsvarianten bekannt. Aus der EP-A-0 425 567 ist beispielsweise ein Reifen mit einem laufrichtungsgebunden ausgeführten Laufstreifenprofil bekannt, welches sich aus einer Anzahl von in Umfangsrichtung umlaufenden Blockreihen zusammensetzt.

Es ist ferner bekannt, dass vor allem die Bremseigenschaften eines Reifens auf trockenem Untergrund durch die Steifigkeit des Laufstreifens in Längsrichtung beeinflussbar sind. Um die Bremseigenschaften auf trockenem Untergrund zu verbessern, ist es daher von Vorteil, Laufstreifenbänder vorzusehen oder die Blöcke in Blockreihen in Umfangsrichtung möglichst lang auszuführen. Auch die Ausführung der Quernuten spielt eine gewisse Rolle, so ist es zur Umfangsversteifung von Blöcken von Vorteil, die Quernuten nicht gerade verlaufen zu lassen, sondern mit einer Knickstelle in ihrem Verlauf zu versehen.

Der Erfindung liegt die Aufgabe zu Grund, mit Quernuten versehene Laufstreifenprofile in Umfangsrichtung gezielt versteifen zu können.

Gelöst wird die gestellte Aufgabe erfindungsgemäß durch Quernuten, die von zumindest einer Flanke begrenzt sind, welche aus zumindest drei Flankenflächen besteht, von welchen zumindest eine eine an die Blockoberseite anschließende Schrägfläche ist, die radial oberhalb der Knickstelle der Quernut ausgebildet ist.

Auf diese Weise lassen sich die die Quernuten begrenzenden Blockflanken besonders vorteilhaft versteifen, insbesondere durch die Möglichkeit des gegenseitigen Abstützens der Flankenflächen, sodass die "Statik" des Profilblockes in Reifenumfangsrichtung in der erwünschten Weise beeinflussbar ist.

Gemäß einer vorteilhaften Ausführungsform der Erfindung weist die mit einer rückspringenden Knickstelle versehene Blockflanke vier Flankenflächen auf, von welchen zwei an die Blockoberseite anschließende Schrägflächen sind und zwei an den Nutgrund anschließende, zumindest im Wesentlichen in radialer Richtung verlaufende und durch die Knickstelle voneinander getrennte Flächen sind. Zwei Schrägflächen lassen sich an einer Blockflanke mit einer rückspringenden Knickstelle vorteilhaft anordnen.

Eine besonders günstige gegenseitige Abstützung und "Verschränkung" der beteiligten Blockflankenflächen ergibt sich dann, wenn die Schrägflächen unter unterschiedlichen Winkeln zur radialen Richtung verlaufen und wenn eine der beiden Schrägflächen eine längliche Dreieckform aufweist, wobei der den kleinsten Winkel aufweisende Eckbereich über die Knickstelle hinausragt.

Eine besonders günstige gegenseitige Abstützung wird dadurch begünstigt, dass die andere Schrägfläche vorzugsweise eine Viereckform aufweist und eine Begrenzungskante besitzt, welche von der blockinnenseitig gelegenen Ecke der dreieckförmigen Schrägfläche zum oberen Ende der Knickstelle verläuft.

G+t eine optimale Stabilisierung und Versteifung des Blockes in Umfangsrichtung spielt die Größe des Winkels der beiden Schrägflächen zur radialen Richtung eine gewisse Rolle. Besonders günstig ist es, wenn der Winkel, den die dreieckförmige Schrägfläche mit der radialen Richtung einschließt, 20° bis 70° beträgt und größer ist als der Winkel, den die andere Fläche mit der radialen Richtung einschließt.

Die Blockflanke mit der vorspringenden Knickstelle lässt sich auf besonders einfache Weise derart gestalten, dass der Block in Umfangsrichtung versteift bzw. stabilisiert wird. Dazu ist vorgesehen, dass diese Blockflanke drei Flankenflächen aufweist, von welchen zwei zumindest im Wesentlichen in radialer Richtung verlaufen, an den Nutgrund anschließen und durch die Knickstelle voneinander getrennt sind, wobei die Schrägfläche radial außerhalb der Knickstelle, etwa mittig zu dieser, verläuft.

Ein sehr guter Stabilisierungseffekt lässt sich dabei bereits mit einer dreieckförmig gestalteten Schrägfläche erzielen, die vergleichsweise kleinflächig ausgeführt sein kann. Dabei ist es von Vorteil, wenn der Winkel, den diese Schrägfläche mit der radialen Richtung einschließt, zwischen 30° und 85° gewählt wird.

Weitere Merkmale, Vorteile und Einzelheiten der Erfindung werden nun anhand der Zeichnung, die ein Ausführungsbeispiel darstellt, näher beschrieben. Dabei zeigen
Fig. 1 eine Teilabwicklung der einen Hälfte eines Profils eines Laufstreifens für einen Fahrzeugluftreifen,
Fig. 2 eine Draufsicht auf eine Quernut in größerem Maßstab,
Fig. 3 eine Schrägansicht von zwei aufeinanderfolgenden Blöcken und
Fig. 4 eine Schrägansicht der beiden Blöcke aus Fig. 3 von der anderen Richtung her gesehen.

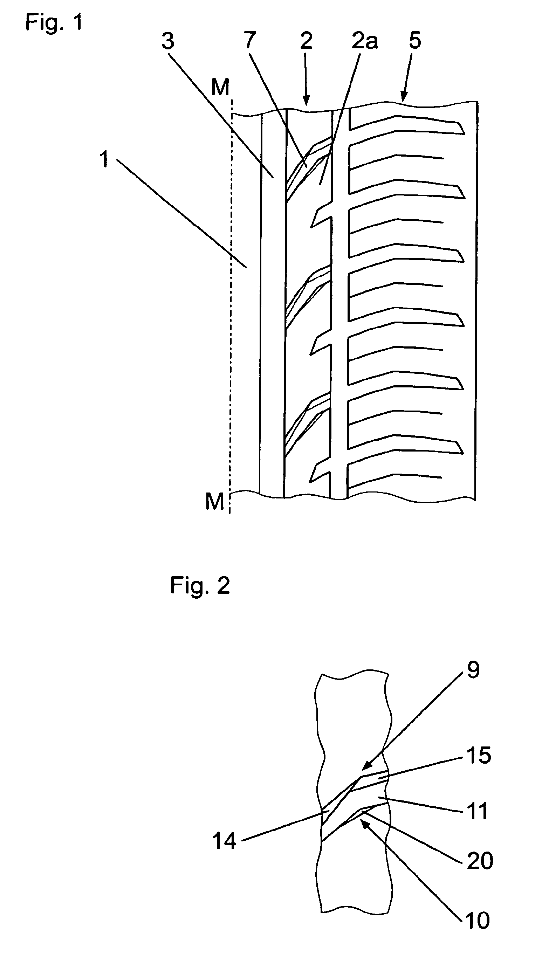

Fig. 1 zeigt ein Profil für einen Laufstreifen eines Fahrzeugluftreifens für Personenkraftwagen. Das Profil weist ein entlang der Äquatorlinie M-M verlaufendes Laufstreifenband 1 auf, welches beispielsweise durch nicht gezeigte Sacknuten strukturiert sein kann und in der dargestellten Laufstreifenhälfte zwei Blockreihen 2, 5 aufweist, welche voneinander und vom mittigen Laufstreifenband 1 durch je eine breite in Umfangsrichtung und gerade umlaufende Umfangsnut 3, 4 getrennt sind. Die zweite nicht gezeigte Laufstreifenhälfte kann analog aber abweichend ausgeführt sein. Die Schulterblockreihe 5 ist durch eine Vielzahl von Quernuten 6 in Blöcke 5a gegliedert. Auch die Blockreihe 2 ist durch Quernuten 7 in Blöcke 2a gegliedert, wobei bei der dargestellten Ausführungsform die Blöcke 2a eine größere Umfangserstreckung aufweisen als die Schulterblöcke 5a, da zwei Schulterblöcken 5a ein Block 2a entspricht. Eine zusätzliche Gliederung bzw. Strukturierung der Blöcke 2a erfolgt durch Sacknuten 8, die von der Umfangsnut 4 in die Blöcke 2a hineinverlaufen.

Unter Quernuten im Sinne der Erfindung sind jegliche Nuten zu verstehen, die in Umfangsrichtung aufeinanderfolgende, sich wiederholende Profilstrukturen voneinander trennen. Quernuten können daher auch diagonal, d.h. unter einem vergleichsweise kleinen Winkel zur Umfangsrichtung des Reifens verlaufen.

Bei dem in Fig. 1 gezeigten Ausführungsbeispiel sind die die Blockreihe 2 in Blöcke 2a gliedernden Quernuten 7 an einer Stelle geknickt, sodass sie sich aus zwei Abschnitten 7a, 7b zusammensetzen, wobei sich der Abschnitt 7a diagonal erstreckt und der zweite mehr in Querrichtung verläuft. Der geknickte Verlauf der Quernuten 7 lässt sich anhand des Verlaufes ihres Nutgrundes 11 verfolgen. Der Winkel zwischen den beiden Abschnitten 7a, 7b ist ein stumpfer Winkel in der Größenordnung von 120 bis 175°. Die Quernuten 7 in der Blockreihe 2 werden daher jeweils durch eine Blockflanke 9 mit einer rückspringenden Knickstelle 16 und eine Blockflanke 10 mit einer vorspringenden Knickstelle 17 begrenzt.

Anhand der Fig. 2, 3 und 4 wird nun nachfolgend die besondere Ausführung der Blockflanken 9, 10 näher beschrieben. Wie insbesondere Fig. 2 zeigt, besteht die Blockflanke 9 aus vier Flankenflächen 12, 13, 14, 15. Die beide Flankenflächen 12, 13 schließen an den Nutgrund 11 an und verlaufen gegenüber der radialen Richtung vorzugsweise unter dem für Nutflanken üblichen Winkel in der Größenordnung zwischen 0 und 5°. Die Knickstelle 16 ist eine in radialer Richtung verlaufende Linie. Die Flankenfläche 13 ist ein Viereck, insbesondere ein Rechteck oder ein Trapze, mit der Knickstelle 16 als Basis. An die Flankenfläche 12 schließt Richtung Blockoberfläche eine dreieckförmige Flankenfläche 14 an, welche eine zur radialen Richtung unter einem spitzen Winkel α in der Größenordnung von 20° und 70° verlaufende Schrägfläche ist, die sich als längliches Dreieck über die Knickstelle 16 hinaus erstreckt, sodass die obere Begrenzungskante der Flankenfläche 12, die gleichzeitig auch die Begrenzungskante der Flankenfläche 14 ist, bis an die Blockoberfläche reicht und die Knickstelle 16 überragt. Die Blockflanke 9 wird durch die vierte Flankenfläche 15 komplettiert, die ein Viereck ist, welches ebenfalls eine Schrägfläche ist, die unter einem Winkel β zur Radialen verläuft, welcher kleiner als α ist. Dadurch wird die Flankenfläche 15 in der gezeigten Weise an der Blockflanke 9 positioniert, indem eine ihrer Begrenzungskanten von der blockinnenseitig gelegenen Ecke der dreieckförmigen Flankenfläche 14 zum oberen Ende der Knickstelle 16 verläuft. Durch die gegenseitige Anordnung der Flankenflächen 12, 13, 14, 15 ergibt sich eine besonders vorteilhafte Verschränkung und gegenseitige Abstützung der Flankenflächen 12 bis 15, wodurch die Steifigkeit des Profilblockes in Reifenumfangsrichtung besonders günstig beeinflusst wird.

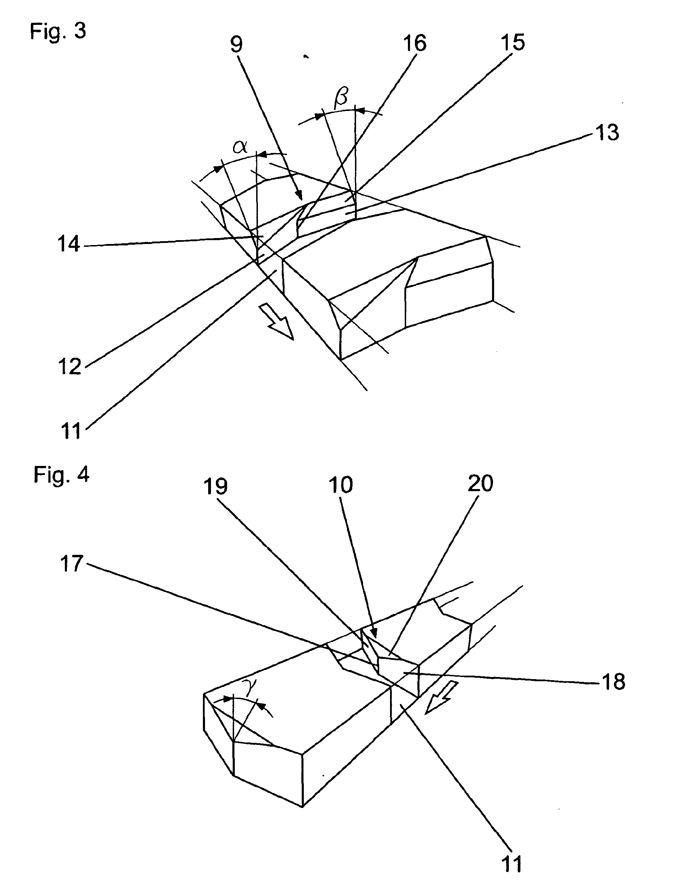

Fig. 4 zeigt eine bevorzugte Ausführung der Blockflanke 10 mit einer vorspringenden Knickstelle 17. Die Blockflanke 10 wiest drei Flankenflächen 18, 19, 20 auf, wobei die beiden Flankenflächen 18, 19 an den Nutgrund 11 anschließen und vorzugsweise in üblicher Weise unter einem Winkel von 0° bis 5° zur radialen Richtung verlaufen. Oberhalb der Knickstelle 17 ist der Block durch die dritte, dreieckförmige Flankenfläche 20 abgeschrägt. Die dreieckförmige schräge Flankenfläche 20 ist unter einem Winkel γ in der Größenordnung von 30 bis 85° gegenüber der radialen Richtung geneigt. Die Dreieckform der Fläche 20 ergibt sich durch die vorspringende Knickstelle 17. Die Flankenfläche 20 kann sich bis zu den Umfangsnuten erstrecken oder, wie dargestellt, innerhalb der Nutabschnitte 7a, 7b enden. Es ist ferner möglich, den Block 2a größflächiger abzuschrägen, sodass die sich ergebende Schrägfläche ein Fünfeck wird.

Die Erfindung ist auf die dargestellten Ausführungsformen nicht eingeschränkt. So ist es beispielsweise möglich, lediglich die rückspringende oder lediglich die vorspringende Blockflanke gemäß der Erfindung auszuführen.

## Patentansprüche

1. Fahrzeugluftreifen mit einem Laufstreifen mit einem Profil, welches durch Umfangsnuten (3, 4), Quernuten (6, 7) und dergleichen gebildete Profilpositive, wie Profilblöcke (2a, 5a) oder in Umfangsrichtung umlaufende Laufstreifenbänder (1) aufweist, wobei Quernuten (7) vorgesehen sind, die mit einer Knickstelle (16, 17) versehen sind, an welcher eine Richtungsänderung unter einem stumpfen Winkel erfolgt,
**gekennzeichnet durch**
geknickte Quernuten (7), deren zumindest eine sie begrenzende Blockflanke aus zumindest drei Flankenflächen (12 bis 15, 18 bis 20) besteht, von welchen zumindest eine eine an die Blockoberseite anschließende Schrägfläche (14, 20) ist, die radial oberhalb der Knickstelle (16, 17) ausgebildet ist.

2. Fahrzeugluftreifen nach Anspruch 1, **dadurch gekennzeichnet, dass** die mit einer rückspringenden Knickstelle (16) versehene Blockflanke (9) vier Flankenflächen (12 bis 15) aufweist, von welchen zwei an die Blockoberseite anschließende Schrägflächen (14, 15) sind und zwei an den Nutgrund (11) anschließen, zumindest im Wesentlichen in radialer Richtung verlaufen und durch die Knickstelle (16) voneinander getrennt sind.

3. Fahrzeugluftreifen nach Anspruch 2, **dadurch gekennzeichnet, dass** die beiden Schrägflächen (14, 15) unter unterschiedlichen Winkeln (α, β) zur radialen Richtung verlaufen.

4. Fahrzeugluftreifen nach einem der Ansprüche 1 bis 3, **dadurch gekennzeichnet, dass** die eine der beiden Schrägflächen (14) eine längliche Dreieckform aufweist, wobei der den kleinsten Winkel aufweisende Eckbereich über die Knickstelle (16) hinausragt.

5. Fahrzeugluftreifen nach einem der Ansprüche 1 bis 4, **dadurch gekennzeichnet, dass** die andere Schrägfläche (15) vorzugsweise eine Viereckform aufweist und eine Begrenzungskante besitzt, welche von der blockinnenseitig gelegenen Ecke der anderen Schrägfläche (14) zum oberen Ende der Knickstelle (16) verläuft.

6. Fahrzeugluftreifen nach einem der Ansprüche 1 bis 5, **dadurch gekennzeichnet, dass** der Winkel (α), den die dreieckförmige Schrägfläche (14) mit der radialen Richtung einschließt, 20° bis 70° beträgt und größer ist, als der Winkel (β), den die andere Schrägfläche (15) mit der radialen Richtung einschließt.

7. Fahrzeugluftreifen nach Anspruch 1, **dadurch gekennzeichnet, dass** die mit einer vorspringenden Knickstelle (17) versehene Blockflanke (10) drei Flankenflächen (18 bis 20) aufweist, von welchen zwei zumindest im Wesentlichen in radialer Richtung verlaufen, an den Nutgrund (11) anschließen und durch die Knickstelle (17) voneinander getrennt sind, wobei die Schrägfläche (20) radial außerhalb der Knickstelle (17) etwa mittig zu dieser verläuft.

8. Fahrzeugluftreifen nach Anspruch 1 oder 7, **dadurch gekennzeichnet, dass** die an der mit einer vorspringenden Knickstelle (17) versehenen Blockflanke (10) vorgesehene Schrägfläche (20) dreieckförmig ist.

9. Fahrzeugluftreifen nach Anspruch 7 oder 8, **dadurch gekennzeichnet, dass** der Winkel (γ), den die Schrägfläche (20) mit der radialen Richtung einschließt, 30° bis 85° beträgt.

## Claims

1. Pneumatic vehicle tyre with a tread rubber comprising a profile which has profile positives, such as profile blocks (2a, 5a) formed by circumferential grooves (3, 4), transverse grooves (6, 7) and the like or has tread rubber strips (1) running in the circumferential direction, wherein transverse grooves (7) which are provided with a kink (16, 17) at which a change of direction takes place at an obtuse angle are provided, **characterized by** kinked transverse grooves (7), the at least one block flank of which, delimiting them, comprises at least three flank faces (12 to 15, 18 to 20), at least one of which is a sloping face (14, 20) adjoining the upper side of the block, which sloping face is formed radially above the kink (16, 17).

2. Pneumatic vehicle tyre according to Claim 1, **characterized in that** the block flank (9), provided with a set-back kink (16), has four flank faces (12 to 15), two of which are sloping faces (14, 15) adjoining the upper side of the block and two of which adjoin the bottom of the groove (11), run at least substantially in a radial direction and are separated from each other by the kink (16).

3. Pneumatic vehicle tyre according to Claim 2, **characterized in that** the two sloping faces (14, 15) run at different angles (α, β) to the radial direction.

4. Pneumatic vehicle tyre according to one of Claims 1 to 3, **characterized in that** one of the two sloping faces (14) has an elongated triangular form, the corner region that has the smallest angle protruding beyond the kink (16).

5. Pneumatic vehicle tyre according to one of Claims 1 to 4, **characterized in that** the other sloping face (15) preferably has a rectangular form and has a delimiting edge which runs from the corner of the other sloping face (14) that is on the inner side of the block to the upper end of the kink (16).

6. Pneumatic vehicle tyre according to one of Claims 1 to 5, **characterized in that** the angle (α) which the triangular sloping face (14) encloses with the radial direction is 20° to 70° and is greater than the angle (β) which the other sloping face (15) encloses with the radial direction.

7. Pneumatic vehicle tyre according to Claim 1, **characterized in that** the block flank (10) that is provided with a set-forward kink (17) has three flank faces (18 to 20), two of which run at least substantially in the radial direction, adjoin the bottom of the groove (11) and are separated from each other by the kink (17), the sloping face (20) running radially outside the kink (17), approximately centrally in relation to the latter.

8. Pneumatic vehicle tyre according to Claim 1 or 7, **characterized in that** the sloping face (20) provided on the block flank (10) that is provided with a set-forward kink (17) is triangular.

9. Pneumatic vehicle tyre according to Claim 7 or 8, **characterized in that** the angle (γ) which the sloping face (20) encloses with the radial direction is 30° to 85°.

## Revendications

1. Bandage pneumatique comprenant une bande de roulement avec un profil, qui présente des parties profilées positives formées par des rainures périphériques (3, 4), des rainures transversales (6, 7) et similaires, comme des blocs profilés (2a, 5a) ou des bandes (1) de la bande de roulement s'étendant tout autour dans la direction périphérique, des rainures transversales (7) étant prévues, lesquelles sont pourvues d'un point d'inflexion (16, 17) au niveau duquel s'effectue un changement de direction suivant un angle obtus,
**caractérisé par**
des rainures transversales infléchies (7), dont au moins un flanc du bloc les limitant se compose d'au moins trois surfaces de flanc (12 à 15, 18 à 20), dont au moins une est une surface oblique (14, 20) se raccordant au côté supérieur du bloc et qui est réalisée radialement au-dessus du point d'inflexion (16, 17).

2. Bandage pneumatique selon la revendication 1, **caractérisé en ce que** le flanc du bloc (9) pourvu d'un point d'inflexion (16) en retrait présente quatre surfaces de flanc (12 à 15) dont deux sont des surfaces obliques (14, 15) se raccordant au côté supérieur du bloc, et deux se raccordent au fond de rainure (11), s'étendent au moins essentiellement dans la direction radiale et sont séparées l'une de l'autre par le point d'inflexion (16).

3. Bandage pneumatique selon la revendication 2, **caractérisé en ce que** les deux surfaces obliques (14, 15) s'étendent suivant des angles différents (α, β) par rapport à la direction radiale.

4. Bandage pneumatique selon l'une quelconque des revendications 1 à 3, **caractérisé en ce que** l'une des deux surfaces obliques (14) présente une forme triangulaire allongée, la région de coin présentant le plus petit angle saillant au-delà du point d'inflexion (16).

5. Bandage pneumatique selon l'une quelconque des revendications 1 à 4, **caractérisé en ce que** l'autre surface oblique (15) présente de préférence une forme quadrilatérale et possède une arête de limitation, qui s'étend depuis le coin du côté intérieur du bloc de l'autre surface oblique (14) vers l'extrémité supérieure du point d'inflexion (16).

6. Bandage pneumatique selon l'une quelconque des revendications 1 à 5, **caractérisé en ce que** l'angle (α) que forme la surface oblique (14) triangulaire avec la direction radiale, est compris entre 20° et 70° et est supérieur à l'angle (β) que forme l'autre surface oblique (15) avec la direction radiale.

7. Bandage pneumatique selon la revendication 1, **caractérisé en ce que** le flanc du bloc (10) pourvu d'un point d'inflexion (17) saillant présente trois surfaces de flanc (18 à 20) dont deux au moins s'étendent essentiellement dans la direction radiale, se raccordent au fond de rainure (11) et sont séparées l'une de l'autre par le point d'inflexion (17), la surface oblique (20) s'étendant radialement à l'extérieur du point d'inflexion (17) approximativement au milieu par rapport à celui-ci.

8. Bandage pneumatique selon la revendication 1 ou 7, **caractérisé en ce que** la surface oblique (20) prévue sur le flanc du bloc (10) pourvu d'un point d'inflexion (17) saillant est triangulaire.

9. Bandage pneumatique selon la revendication 7 ou 8, **caractérisé en ce que** l'angle (γ) que forme la surface oblique (20) avec la direction radiale, est compris entre 30° et 85°.
